# EUROPEAN PATENT APPLICATION

(11) **EP 3 373 556 A1**
(43) Date of publication of application: **12.09.2018**
(21) Application number: 18158966.4
(22) Date of filing: 27.02.2018
(51) Int. Cl.: H04L 29/08, G06F 9/50, G06F 9/46, H04L 12/24

(54) **METHOD TO BE IMPLEMENTED AT A NETWORK ELEMENT FOR MANAGING INSTANCES OF NETWORK FUNCTIONS, AND CORRESPONDING NETWORK ELEMENT**

(30) Priority: 07.03.2017 EP 17305238
(71) Applicant: THOMSON Licensing, 92130 Issy-les-Moulineaux (FR)
(72) Inventor: LEGALLAIS, Yvon, 35576 Cesson-Sevigne (FR); ONNO, Stephane, 35576 Cesson-Sevigne (FR); LE SCOUARNEC, Nicolas, 35576 Cesson-Sevigne (FR)
(74) Representative: Vidon Brevets & Stratégie

(57) **Abstract**

Network element (120) adapted to belong to a network equipment (100) configured to operate a plurality of network functions (Fx, Fy, Fz) and to be in communication with one or more devices (10), wherein the network element (120) comprises:
- one or more interfaces of communication (402) configured to:
▪ receive a first packet after processing by a first instance of a network function (Fx), said first packet comprising an indicator of the oldest pending transaction handled by the first instance of said network function (Fx);
▪ receive a second packet after processing by a second instance of said network function (Fx), said second packet comprising an indicator of the oldest pending transaction handled by the second instance of said network function (Fx), the first packet and the second packet comprising the same information before respectively processing by the first and second instances of said network function (Fx);

- a comparator (122) to determine whether the indicator of the first packet is equal to the indicator of the second packet,
and wherein said one or more interfaces of communication (402) are further configured to notify a controller (101) that the first and second indicators are equal in order to discard the former operated instance of said network function (Fx) amongst the first and the second instances.

## Description

### TECHNICAL FIELD

The present disclosure generally relates to the management of network functions and more particularly to the transfer of transactions from a first instance of a network function to a second instance of said network function.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The development of the cloud technologies (such as the virtualization of network functions) allows the emergence of a new architecture for Internet access wherein services running in a residential gateway (such as routers, firewalls (filtering unwanted or malicious traffic), virus scanning, deep packet inspection (DPI) service, Network Address Translators NAT (modifying packets source and destination addresses), intrusion detection and prevention (IDP) service, etc.) are moved to the NSP's (Network Service Provider) datacenter. By reducing the complexity of the residential gateway, NSPs hope to reduce the time to market to deploy new services and to ease troubleshooting operations.

Networking Function Virtualization (NFV) enables the provision of network functions for home or corporate gateways directly from the NSP's facility in a cloud provisioning manner. Virtual Customer Premise Equipment (vCPE) is part of the so called Network Function Virtualization paradigm that is about executing network functions (e.g., Router, Deep Packet Inspection, DNS server, Firewall) onto commoditized hardware hosting a virtual machine infrastructure (e.g., private or public cloud infrastructure) instead of requiring specific dedicated hardware. To that end, the home gateway acts as a bridge (BRG) and needs to connect to a virtual gateway (vG) in the cloud to reach the hosts where the network functions are provisioned and run, even for basic functions such as DHCP, Firewall, DNS and UI (User Interface).

In the NFV context, the delivery of a service often requires to process packets along a set of network functions (so called services path). To that end, in a network service provider infrastructure, several virtual machines can execute a same network function, so that several instances of that network function are operated. The traffic is distributed across those virtual machines according to predefined load balancing rules. When a virtual machine operating an instance of the network function becomes overloaded, a part of its allocated traffic must be redistributed to another virtual machine implementing another instance of the same network function.

However, the rerouting of traffic from an instance to another instance of a network function may result in the degradation of user experience or security when one or more pending transactions are not properly managed.

There is then a need of a mechanism to properly handle the transition of transactions from a first instance of a network function to a second instance of a given network function.

### SUMMARY

The disclosure concerns a method to be implemented at a first network element adapted to belong to a network equipment configured to operate a plurality of network functions and to be in communication with one or more devices,
wherein said method comprises:
- receiving a first packet after processing by a first instance of a network function, said first packet comprising an indicator of the oldest pending transaction handled by the first instance of said network function;
- receiving a second packet after processing by a second instance of said network function, said second packet comprising an indicator of the oldest pending transaction handled by the second instance of said network function, the first packet and the second packet comprising the same information before processing respectively by the first and second instances of said network function;
- determining whether the indicator of the first packet is equal to the indicator of the second packet.

In an embodiment, said method can further comprise, when indicators of the first and second packets are the same, notifying a controller that the first and second indicators are equal in order to discard the former operated instance of said network function amongst the first and the second instances.

In an embodiment, said method can further comprise, when indicators of the first and second packets are the same, discarding the next packets processed by the former operated instance of said network function amongst the first and the second instances.

In an embodiment, said method can further comprise, when indicators of the first and second packets are different, dropping the received packet, amongst the first and second packets, which has been processed by the last operated instance of said network function amongst the first and the second instances.

In an embodiment, the indicators can be introduced in the first and second packets respectively by the first and second instances of said network function.

In an embodiment, the first and second packets, before processing respectively by the first and second instances of said network function, can be preliminarily processed by a second network element configured to add a packet number to an incoming packet and to duplicate said incoming packet to said first packet and said second packet.

In an embodiment, the indicator can be added to a header of the first and second packets.

In an embodiment, the first network element can be a load balancer.

The present disclosure also concerns a network element adapted to belong to a network equipment configured to operate a plurality of network functions and to be in communication with one or more devices,
wherein the network element comprises at least one memory and one or more processors configured to:
- receive a first packet after processing by a first instance of a network function, said first packet comprising an indicator of the oldest pending transaction handled by the first instance of said network function;
- receive a second packet after processing by a second instance of said network function, said second packet comprising an indicator of the oldest pending transaction handled by the second instance of said network function, the first packet and the second packet comprising the same information before processing respectively by the first and second instances of said network function;
- determine whether the indicator of the first packet is equal to the indicator of the second packet.

Besides, the present disclosure further concerns a network element adapted to belong to a network equipment configured to operate a plurality of network functions and to be in communication with one or more devices,
wherein the network element comprises:
- one or more interfaces of communication configured to:
   ▪ receive a first packet after processing by a first instance of a network function, said first packet comprising an indicator of the oldest pending transaction handled by the first instance of said network function;
   ▪ receive a second packet after processing by a second instance of said network function, said second packet comprising an indicator of the oldest pending transaction handled by the second instance of said network function, the first packet and the second packet comprising the same information before respectively processing by the first and second instances of said network function;
- a comparator to determine whether the indicator of the first packet is equal to the indicator of the second packet.

In an embodiment, said one or more interfaces of communication can further be configured to notify a controller that the first and second indicators are equal in order to discard the former operated instance of said network function amongst the first and the second instances.

In an embodiment, said one or more interfaces of communication can further be configured to discard the next packets processed by the former operated instance of said network function amongst the first and the second instances, when indicators of the first and second packets are the same.

In an embodiment, said one or more interfaces of communication can further be configured, when indicators of the first and second packets are different, to drop the received packet, amongst the first and second packets, which has been processed by the last operated instance of said network function amongst the first and the second instances.

In an embodiment, the indicators can be introduced in the first and second packets respectively by the first and second instances of said network function.

In an embodiment, the first and second packets, before processing respectively by the first and second instances of said network function, can be preliminarily processed by a second network element configured to add a packet number to an incoming packet and to duplicate said incoming packet to said first packet and said second packet.

In an embodiment, the indicator can be added to a header of the first and second packets.

In an embodiment, the first element can be a load balancer.

Besides, the present disclosure further concerns a non-transitory program storage device, readable by a computer, tangibly embodying a program of instructions executable by the computer to perform a method to be implemented at a first network element adapted to belong to a network equipment configured to operate a plurality of network functions and to be in communication with one or more devices,
wherein said method comprises:
- receiving a first packet after processing by a first instance of a network function, said first packet comprising an indicator of the oldest pending transaction handled by the first instance of said network function;
- receiving a second packet after processing by a second instance of said network function, said second packet comprising an indicator of the oldest pending transaction handled by the second instance of said network function, the first packet and the second packet comprising the same information before processing respectively by the first and second instances of said network function;
- determining whether the indicator of the first packet is equal to the indicator of the second packet.

The present disclosure also concerns a computer program product stored on a non-transitory computer readable medium and comprising program code instructions executable by a processor for implementing a method to be implemented at a first network element adapted to belong to a network equipment configured to operate a plurality of network functions and to be in communication with one or more devices,
wherein said method comprises:
- receiving a first packet after processing by a first instance of a network function, said first packet comprising an indicator of the oldest pending transaction handled by the first instance of said network function;
- receiving a second packet after processing by a second instance of said network function, said second packet comprising an indicator of the oldest pending transaction handled by the second instance of said network function, the first packet and the second packet comprising the same information before processing respectively by the first and second instances of said network function;
- determining whether the indicator of the first packet is equal to the indicator of the second packet.

The method according to the disclosure may be implemented in software on a programmable device. It may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

The disclosure thus provides a computer-readable program comprising computer-executable instructions to enable a computer to perform the method aforementioned.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an example of a network environment adapted to implement some embodiments of the present principles;
- Figure 2 is a flow chart of an exemplary method for managing instances of network functions in a network equipment, according to the present principles;
- Figure 3 is an exemplary sequence of transactions in the network environment of Figure 1, according to the present principles;
- Figure 4 shows an example of a hardware configuration of each network element of the Figure 1, according to the present principles.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes that may be substantially represented in computer readable media and so executed by a computer or processor, whether or not such computer or processor is explicitly shown.

The functions of the various elements shown in the figures may be provided with dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical digital multimedia content delivery methods, devices and systems. However, because such elements are well known in the art, a detailed discussion of such elements is not provided herein. The disclosure herein is directed to all such variations and modifications known to those skilled in the art.

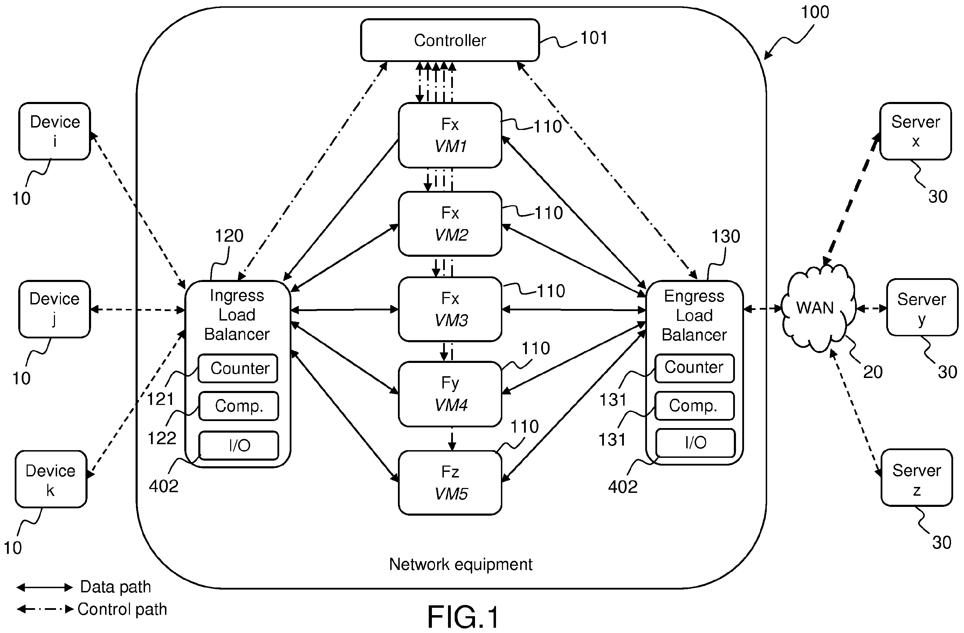

Figure 1 is a schematic diagram of an exemplary network infrastructure comprising a network equipment 100 (such as a customer premise equipment CPE) and several devices 10 (such as a switch, a portable media device, a mobile phone, a Set Top Box, a laptop, etc.) in communication with the network equipment 100 (e.g., via cable, optic fiber, xDSL, satellite, LTE, 3G technologies, etc.). It should be understood that further apparatuses (not shown) can be arranged between a device 10 and the network equipment 100.

The network equipment 100 can comprise one or several physical hosts (not shown in the Figures) belonging for instance to a datacenter. Each host can run one or several virtual machines 110 (or any other forms of software elements) configured to operate network functions (such as DHCP, DNS, Firewall, Parental Control, Intrusion Prevention System, Virus Scanning, Deep Packet Inspection, Network Address Translators, etc.). In other words, network functions providing by a network equipment 100 can be distributed over several hosts.

The network equipment 100 can further provide connectivity to a Wide Area Network (WAN) 20 (such as Internet) to the network devices 10.

In the following, it is assumed that network configuration between devices 10 and the network equipment 100 is already obtained, for example, from a controller 101. In an example, the controller 101 can be a high level management element (for instance compliant with ETSI NFV MANO standards) in charge of instantiation, scale out and scale in, performance measurements, event correlation, termination of implementation of virtual machines, etc. The controller 101 can also be responsible for updating or upgrading software and configuration of network functions, and for communicating with any other elements of a network operator's infrastructure. In another embodiment, the controller can be arranged outside of the network equipment 100.

In addition, as further shown in the example of Figure 1, the network equipment 100 can comprise an ingress load balancer (ILB) 120 and an egress load balancer (ELB) 130 configured notably to receive packets:
- from devices 10 (eventually after network processing such as encapsulation and de-encapsulation operations) to address them (after processing when required) to remote servers 30 through the WAN 20; and/or
- from remote servers 30 (eventually after network processing such as encapsulation and de-encapsulation operations) to address them (after processing when required) to the corresponding devices 10.

The ingress load balancer 120 and egress load balancer 130 can provide scalability and reliability while improving the use of resources. To this end, different policies may be applied to distribute the traffic among the virtual machines 110 of the network equipment 100, such as:
- route based, according to origin or destination IP address or MAC address,
- type of traffic based (such as layer 4 protocol, best effort, video, audio, etc.),
- round robin principles.

In addition, the ingress and egress load balancers 120 and 130 can further perform classification (i.e.; the action for categorizing packets to differentiate the associated processing and for transmitting them to the corresponding network functions) relying for instance on one or a combination of the following criteria:
- source/destination MAC address,
- source/destination IP address,
- source/ destination ports and protocol type,
- payload parameters.

It is hereinafter assumed that the network equipment 100 comprises several instances of network functions, arranged between the ingress load balancer 120 and the egress load balancer 130. Thus, in the illustrative but non limitative example of Figure 1, three instances of the network function Fx are implemented by the virtual machines 110 VM1, VM2 and VM3. One instance of the network function Fy is implemented by the virtual machine 110 VM4 and one instance of the network function Fz is implemented by the virtual machine 110 VM5.

In this example, the ingress and egress load balancers 120 and 130 are configured to distribute traffic amongst the different instances VM1 to VM5 of network functions Fx, Fy, and Fz.

In the following, it is assumed that a transaction is a sequence of two or more messages exchanged between two apparatuses for example to establish a connection or to exchange data. The shortest transaction is a request-response sequence. Depending on the observation point, a transaction can be composed of several transactions of different protocols.

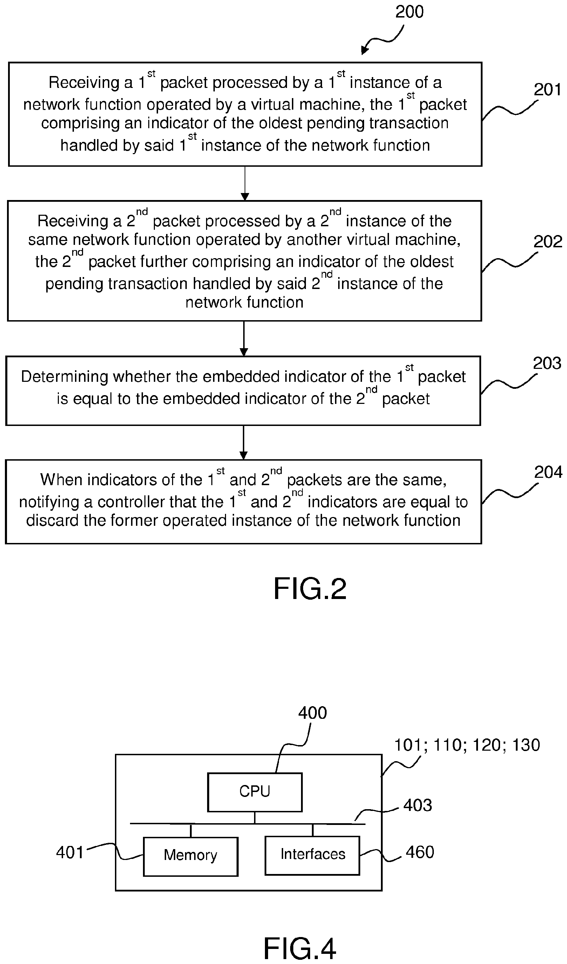

As shown in Figure 2, the method 200 implemented at the ingress load balancer 120 of the network equipment 100 and compliant with the present principles can comprise:
- receiving (step 201), by the ingress load balancer 120 (thanks for instance to the interfaces of communication 402), a first packet after processing by a first instance of a network function Fx operated by a virtual machine VM1. The first packet comprises an indicator of the oldest pending transaction handled by said first instance of the network function Fx;
- receiving (step 202), by the ingress load balancer 120, a second packet after processing by a second instance of the same network function Fx operated by another virtual machine VM2. The second packet further comprises an indicator of the oldest pending transaction handled by said second instance of the network function Fx. The first packet and the second packet are the same and comprise the same information before processing respectively by the first and second instances of said network function;
- determining (step 203), by the load balancer 120 (thanks for instance to the comparator 122), whether the embedded indicator of the first packet is equal to the embedded indicator of the second packet;
- when indicators of the first and second packets are the same, notifying (step 204) the controller 101 that the first and second indicators are equal in order to, for instance, discard the former operated instance of said network function Fx amongst the first and the second instances. In a variant or complement, when indicators of the first and second packets are the same, the method 200 can comprise discarding, by the ingress load balancer 120, the next packets processed by the former operated instance of said network function amongst the first and the second instances.

According to the present principles, the method 200 can be similarly implemented at the egress load balancer 130.

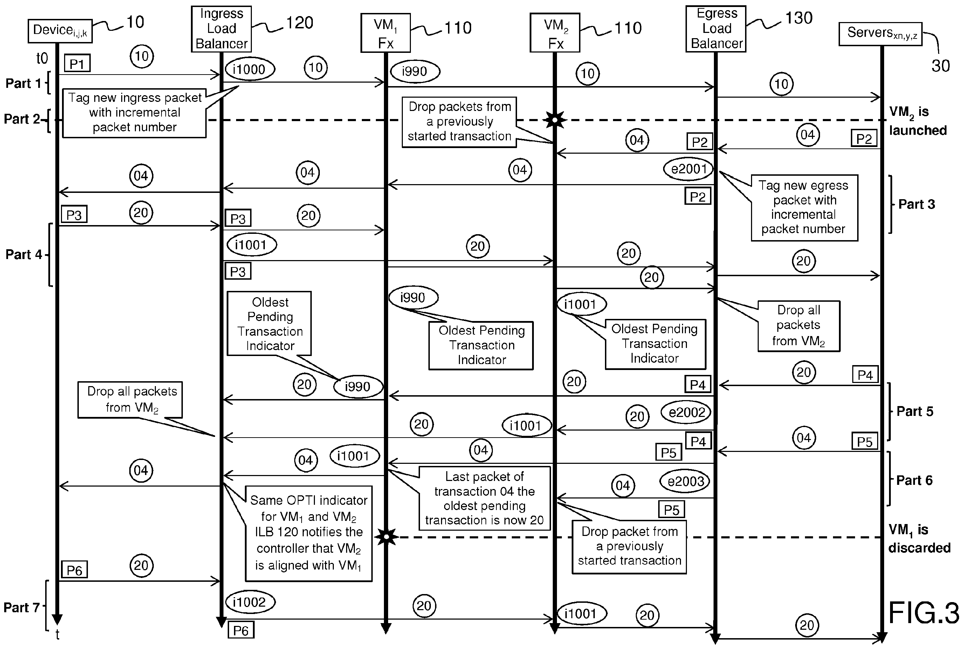

Figure 3 depicts an illustrative, but non limitative, example of implementation of the present principles in reference to the schematic diagram shown in Figure 1. In particular, the example of Figure 3 describes the behavior of different elements of Figure 1 through three transactions - referenced 04, 10 and 20 - between respectively the device 10 i and the server 30 x, the device 10 j and the server 30 y, and the device 10 k and the server 30 z. The devices 10 i, j and k and the servers 30 x, y and z can be any type of elements communicating through the VNF infrastructure shown in Figure 1 (such as mobile devices accessing to an Internet server through a Network Service Provider infrastructure).

In the example, the virtual machines 110 VM1 and VM2 of the network equipment 100 are configured to operate an instance of the same network function Fx. It is assumed that, at the beginning of the observation t0, only a first instance of the network function Fx is running on the virtual machine VM1. Said first instance is about to be dropped (for example for maintenance reasons) or overloaded, and replaced or assisted by a second instance of the network function Fx running on the virtual machine VM2. The first instance of the virtual machine VM1 is currently processing two pending transactions (04 and 10 on Figure 3).

In the example of Figure 3, the ingress and egress load balancers 120 and 130 are configured to tag with an indicator (ingress indicator or egress indicator) every packets they have to route to a network function, arriving at the network equipment 100 either from the devices 10 (for the ingress load balancer 120) or from the WAN 20 (for the egress load balancer 130). The indicator can for example be added in the header of the packet (for example in the form of a variable length context header). In particular, the indicator added to every packet can be an incremental value (such as an integer value) incremented every time a packet is received by the considered load balancer 120, 130. Naturally, any other sort of indicator can be implemented without departing from the scope of the disclosure.

To this end, the ingress and egress load balancers 120 and 130 can comprise a counter 121, 131 as shown in Figure 1, configured to increment the value of the indicator every time a packet is received.

It should be understood that the numbering sequence of the ingress indicator implemented at the ingress load balancer 120 is independent from the numbering sequence implemented at the egress load balancer 130. Besides, the numbering sequence implemented at a load balancer does not consider the transaction, only the received packets.

It is further assumed that a transaction can be equally initiated by a packet arriving at the ingress side or the egress side.

The initial packet (not shown on the Figures) of the transaction 04 has received, as ingress indicator, the value i990 by the ingress load balancer 120. The initial packet of the transaction 10 has received, as ingress indicator, the value i998 by the ingress load balancer 120, meaning that the transaction 04 is older than transaction 10. Then, the initial packets of the transactions 04 and 10 arrived at the virtual machine VM1 with the embedded indicators i990 and i998, respectively.

In the exemplary sequence of packets illustrated in Figure 3, the first packet P1 of the sequence corresponds to a packet of the pending transaction 10 addressed by the device j to the server y. As shown in the part 1 of the exemplary sequence, the ingress load balancer 120 - receiving that packet P1 of the transaction 10 - adds the ingress indicator i1000 to said received packet, before forwarding it to the first instance of the network function Fx operated by the virtual machine VM1.

After processing of the received packet P1 by the network function Fx, the virtual machine VM1 replaces the embedded ingress indicator i1000 with a new indicator i990 (also called OPTI for Oldest Pending Transaction Indicator). The OPTI indicator corresponds to the indicator embedded in the first packet of the oldest pending transaction handled by the first instance of the network function Fx running by the virtual machine VM1. In the example, at reception of the first packet P1 of the sequence by the virtual machine VM1, the OPTI indicator has the value i990, corresponding to the indicator embedded in the first packet of the transaction 04 (the oldest pending transaction handled by the first instance of the network function at VM1) and previously introduced by the ingress load balancer 120. It should be noted that the origin of the added indicator (i.e. ingress or egress) is embedded with the indicator.

In a variant compliant with the present principles, instead of replacing the embedded indicator, the OPTI indicator can be added along with the already embedded indicator introduced by the load balancer.

It should be further noted, that in a further variant or complement, a packet can embed an ingress indicator and egress indicator, in order to indicate the current status of ingress and egress counters to assess the age of the oldest pending transaction.

After having added the OPTI indicator in the processed packet P1, the virtual machine VM1 can forward it to the egress load balancer 130 for transmission to the corresponding server 30 y through the WAN 20. In the example, for conciseness sake, the services path to be applied comprises only one network function. Naturally, it should be understood that the present principles are not limited to services path with one network function, but also apply to services path with one or more network functions.

As shown in part 2 of the exemplary sequence, a second instance of the network function Fx can be launched, by the controller 101, at the virtual machine VM2 before, for instance, a maintenance or an overload of the virtual machine VM1. The controller 101 can instantiate the network function at the virtual machine VM2 and can configure the network elements accordingly. The ingress and egress load balancers 120 and 130 are further configured to route traffic to both instances of the network function Fx in VM1 and VM2 and to maintain the OPTI indicator for those instances of the network function Fx.

In part 3 of the exemplary sequence of Figure 3, an incoming packet P2 of the pending transaction 04, coming from the WAN 20 and received by the egress load balancer 130, receives an egress indicator e2001 from said load balancer 130. The egress load balancer 130 transmits said incoming packet P2 embedding the egress indicator e2001 to both first and second instances of the network function Fx. Since the transaction 04 has been initiated before operating the second instance of the network function Fx on VM2, this incoming packet P2 is dropped by VM2, VM2 being not configured to handle pending transactions established before the launch of the second instance of the network function Fx.

As shown in Figure 3, the first instance of Fx operated by VM1 can process said incoming packet P2, replace the egress indicator e2001 with the OPTI indicator i990 - corresponding to the indicator of the first data packet of the oldest pending transaction handled by VM1 (i.e. transaction 04) - and forward the processed packet to the ingress load balancer 120.

In part 4 of the exemplary sequence of Figure 3, the next incoming packet P3 (belonging to a new transaction 20 launched by a device 10) receives an ingress indicator i1001 by the ingress load balancer 120. This incoming packet P3 is further delivered by the ingress load balancer 120 to both VM1 and VM2 respectively operating the first and second instances of the network functions Fx. VM1 and VM2 consider this incoming packet P3 as the beginning of a new transaction (i.e. the transaction 20), which turns out to be the first pending transaction managed by the VM2. For VM2, the OPTI indicator is then i1001. For VM1, the OPTI remains i990, the transaction 04 being ongoing.

Without any further information, the ingress and egress load balancers 120 and 130 drop every packets coming from VM2, only packets coming from VM1 are processed. In a variant compliant with the present principles, the ingress and egress load balancers can process the first arrived packet from the first and second instances of the network function.

In part 5 of the exemplary sequence shown in Figure 3, a packet P4 is coming back in response to the first packet P3 of the transaction 20. The egress indicator provided by the egress load balancer 130 has now the value e2002. The packet P4 is then processed by both instances of the network function Fx at VM1 and VM2. The packet P4 processed by VM1 embeds the OPTI indicator i990 (ingress indicator of the first packet of transaction 04). The packet P4 processed by VM2 embeds the OPTI indicator i1001 (ingress indicator of the first packet of transaction 20). Both processed packets P4 are forwarded, by VM1 and VM2, to the ingress load balancer 120 which still drops any packet received from VM2.

In part 6 of the exemplary sequence, the next packet P5 - belonging to transaction 04 and receiving the egress indicator e2003 - is dropped by VM2. While processing the packet P5, the first instance of the network function Fx of VM1 detects that the transaction 04 is completed. As a consequence, the OPTI indicator at VM1 is updated from i990 to i1001, which corresponds to the ingress indicator of the first packet of the pending transaction 20. The updated OPTI indicator of VM1 is further added to the processed packet P5, as metadata, when forwarding the packet to the ingress load balancer 120.

The OPTI indicator is now the same for VM1 and VM2 (i.e. i1001) (this can be determined for instance by the comparator 122). The ingress load balancer 120 is then aware that VM2 has the same flow state than VM1. At that time, VM1 can be discarded and the traffic can be forwarded only to VM2. To this end, the ingress load balancer 120 can notify the controller 101 which can then discard VM1 and configure the ingress and egress load balancers accordingly. In a variant, the ingress load balancer 120 can be reconfigured by itself. In a further variant or complement, the ingress load balancer 120 and egress load balancer 130 can be reconfigured by themselves (the egress load balancer being reconfigured when processing the next outbound packet providing the OPTI indicator for VM1 and VM2). In that case, VM1 can be discarded later on when the two load balancers 120 and 130 have notified the controller 101.

In a variant or in a complement compliant with the present principles, the decision to discard one of the instance of the network function can be made upon receipt of the next packets coming from the first and the second instances of the network function Fx and embedding the same OPTI indicator. This can prevent the load balancers from storing OPTI indicators from the different instances of the network function.

The exemplary sequence of Figure 3 is summarized in the below table:

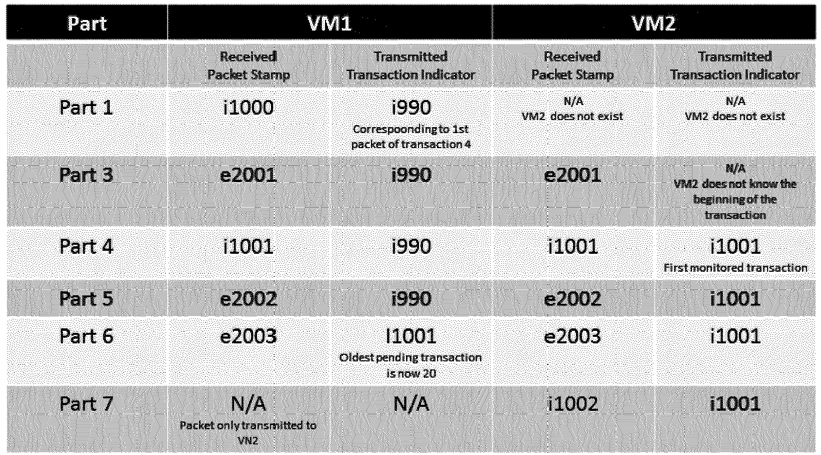

It should be understood that processing performed by the ingress load balancer can be also performed by the egress load balancer, and conversely.

In addition, in case the ingress load balancer and egress load balancer form a standalone entity processing both inbound and outbound traffic, a single counter can be operated.

In another embodiment compliant with the present principles, the load balancer can be embedded in a residential or business gateway. In another embodiment, the method 200 can be implemented by a forwarder (configured to receive packets from ingress and egress load balancers and to address them to the corresponding instances of network functions) arranged for instance between the ingress and egress load balancers.

Thus, thanks to the present principles, when a virtual machine operating an instance of a network function is about to be overloaded or to undergo a maintenance, at least a part of its traffic can be rerouted to another virtual machine implementing another instance of the same network function without any interruption or lost of pending transactions. In addition, load balancers can be stateless regarding the transactions follow up and can be replaced by routing functions.

As shown in Figure 4 depicting one example of a hardware configuration, each of the network elements (such as load balancers, virtual machine, controller) 101, 110, 120, 130 of the network equipment 100 can comprise a Central Processing Unit (CPU) 400 (comprising one or several processors), a memory 401 and one or several interfaces 402 connected together via a bus 403. The CPU 400 is configured for processing various data and for controlling various function and components of each network element 101, 110, 120, 130. The memory 401 may represent both a volatile memory such as RAM, and a non-transitory memory such as a ROM, a hard drive or a flash memory, for processing and storing different files and information as necessary, including computer program products and software. Some of the above-mentioned network functions shown in Figure 1 can be implemented by computer-readable programs stored in the memory 401 of network elements 101, 110, 120, 130. The interfaces 402 are used to communicate between the devices 10 and network elements 120, 130 through wired or wireless connection(s). Interfaces 402 can further comprise user input and/or output elements (e.g., a touch panel, a display screen, a keyboard, a remote control, etc.).

In the Figures, it is to be appreciated that the illustrated blocks or modules can correspond to functional modules, which may or may not correspond to distinguishable physical units. For example, a plurality of such modules may be associated in a unique component or circuit, or correspond to software functionalities. Moreover, a module may potentially be composed of separate physical entities or software functionalities.

References disclosed in the description, the claims and the drawings might be provided independently or in any appropriate combination. Features may be, where appropriate, implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the spirit and scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. A method to be implemented at a first network element (120) adapted to belong to a network equipment (100) configured to operate a plurality of network functions (Fx, Fy, Fz) and to be in communication with one or more devices (10), **characterized in that** said method (200) comprises:
- receiving (201) a first packet after processing by a first instance of a network function (Fx), said first packet comprising an indicator of the oldest pending transaction handled by the first instance of said network function (Fx);
- receiving (202) a second packet after processing by a second instance of said network function (Fx), said second packet comprising an indicator of the oldest pending transaction handled by the second instance of said network function (Fx), the first packet and the second packet comprising the same information before processing respectively by the first and second instances of said network function (Fx);
- determining (203) whether the indicator of the first packet is equal to the indicator of the second packet;
- when indicators of the first and second packets are the same, notifying (204) a controller (101) that the first and second indicators are equal in order to discard the former operated instance of said network function (Fx) amongst the first and the second instances.

2. The method according to claim 1, further comprising, when indicators of the first and second packets are the same, discarding the next packets processed by the former operated instance of said network function (Fx) amongst the first and the second instances.

3. The method according to claim 1 or 2, further comprising, when indicators of the first and second packets are different, dropping the received packet, amongst the first and second packets, which has been processed by the last operated instance of said network function (Fx) amongst the first and the second instances.

4. The method according to claims 1 to 3, wherein the indicators are introduced in the first and second packets respectively by the first and second instances of said network function (Fx).

5. The method according to claims 1 to 4, wherein the first and second packets, before processing respectively by the first and second instances of said network function (Fx), are preliminarily processed by a second network element (130) configured to add a packet number to an incoming packet and to duplicate said incoming packet to said first packet and said second packet.

6. The method according to claims 1 to 5, wherein the indicator is added to a header of the first and second packets.

7. The method according to claims 1 to 6, wherein the first network element (120) is a load balancer.

8. A network element adapted to belong to a network equipment (100) configured to operate a plurality of network functions (Fx, Fy, Fz) and to be in communication with one or more devices (10),
wherein the network element comprises:
- one or more interfaces of communication (402) configured to:
▪ receive a first packet after processing by a first instance of a network function (Fx), said first packet comprising an indicator of the oldest pending transaction handled by the first instance of said network function (Fx);
▪ receive a second packet after processing by a second instance of said network function (Fx), said second packet comprising an indicator of the oldest pending transaction handled by the second instance of said network function (Fx), the first packet and the second packet comprising the same information before respectively processing by the first and second instances of said network function (Fx);
- a comparator (122) to determine whether the indicator of the first packet is equal to the indicator of the second packet.
and wherein said one or more interfaces of communication (402) are further configured to notify a controller (101) that the first and second indicators are equal in order to discard the former operated instance of said network function (Fx) amongst the first and the second instances.

9. The network element according to claim 8, wherein said one or more interfaces of communication (402) are further configured to discard the next packets processed by the former operated instance of said network function (Fx) amongst the first and the second instances, when indicators of the first and second packets are the same.

10. The network element according to claims 8 or 9, wherein said one or more interfaces of communication (402) are further configured, when indicators of the first and second packets are different, to drop the received packet, amongst the first and second packets, which has been processed by the last operated instance of said network function (Fx) amongst the first and the second instances.

11. The network element according to claims 8 to 10, wherein the indicators are introduced in the first and second packets respectively by the first and second instances of said network function (Fx).

12. A computer program product stored on a non-transitory computer readable medium and comprising program code instructions executable by a processor for implementing a method to be implemented at a first network element (120) adapted to belong to a network equipment (100) configured to operate a plurality of network functions (Fx, Fy, Fz) and to be in communication with one or more devices,
**characterized in that** said method comprises:
- receiving (201) a first packet after processing by a first instance of a network function (Fx), said first packet comprising an indicator of the oldest pending transaction handled by the first instance of said network function (Fx);
- receiving (202) a second packet after processing by a second instance of said network function (Fx), said second packet comprising an indicator of the oldest pending transaction handled by the second instance of said network function (Fx), the first packet and the second packet comprising the same information before processing respectively by the first and second instances of said network function (Fx);
- determining (203) whether the indicator of the first packet is equal to the indicator of the second packet;
- when indicators of the first and second packets are the same, notifying (204) a controller (101) that the first and second indicators are equal in order to discard the former operated instance of said network function (Fx) amongst the first and the second instances.
